# EUROPEAN PATENT APPLICATION

(11) **EP 1 260 946 A2**
(43) Date of publication of application: **27.11.2002**
(21) Application number: 02011788.3
(22) Date of filing: 10.03.1998
(51) Int. Cl.: G07F 19/00, G07F 7/10

(54) **Electronic transaction processing system**

(30) Priority: 11.03.1997 JP 5591397
(62) Divisional of application: 98301757.5
(71) Applicant: Hitachi, Ltd., Chiyoda-ku, Tokyo (JP)
(72) Inventor: Yokomura, Katsuya, Yokohama-shi (JP)
(74) Representative: Calderbank, Thomas Roger

(57) **Abstract**

In an electronic commercial transaction processing method and an apparatus for executing the method, an unauthorized user is prevented from ordering articles in an operation to purchase articles via a network. In embodiments thereof, a client device (200) sends a specified URL (32) to a server device (1700) and then receives a home page. The client device (200) then displays a page to sell articles and transmits information of selected articles to the server device (1700). When a page to confirm an order of articles is indicated, an URL (32) thereof is read from an external storage medium (210) and then the inputted URL (32) and the information of selected articles are sent to the server device (1700). Namely, any user who does not have an external storage medium (212) in which the URL of the order confirmation page is stored is not allowed to order articles.

## Description

The present invention relates to an electronic transaction processing executed via a communication network. Particularly, the present invention relates to processing in which an item to be purchased is selected and ordered.

When an item is to be purchased in the conventional electronic transaction processing system via a communication network such as the Internet, the user inputs to a world wide web (WWW) browser an identifier of a uniform resource locator (URL) of a home page in which the item is available and then selects the item arranged in the home page or another page linked therewith by an arc. Thereafter, control is passed to a page linked with the page in which the item has been selected to thereby display the selected item to be purchased. After having confirmed the item in the page, the user depresses a button or the like in the page by a mouse cursor to order the item.

Description will now be given of an example of the conventional technology in which a book is purchased in a home page of a bookstore.

### Step 1: Membership registration

The user registers as a member to purchase books in the electronic shopping system. For the membership registration, the user opens a page of operation guide by the WWW browser to down-load a membership registration form from the page of the guidance and then prints the registration form on a sheet of paper. On the form, the user writes a name, an address, a telephone number, a delivery destination name, a delivery destination address, a type of credit card for settlement, and a credit number. The user then sends the form to the bookstore via a facsimile apparatus or by post.

### Step 2: Delivery of member number and password by post

Receiving the delivered form, the bookstore confirms and identifies the user in accordance with the credit number written on the form. Completely having recognized the user, the bookstore sends a user identifier (ID) and a password to the user by post.

### Step 3: Opening of a page to input the user ID and the password to purchase books

The user initiates the WWW browser in a communication apparatus such as a personal computer connected to the Internet and then inputs thereto a home-page URL (http://WWW.xxxx.co.jp/) of the bookstore. Through several pages connected by an arc from the home page, the user opens a page to input the user ID and the password to purchase a book.

### Step 4: Inputting of the user ID and the password

The user inputs the user ID and the password in the page. The WWW server checks the user ID and the password and then sends to the user a page to select the book.

### Step 5: Searching for the objective book by a keyword or the like

The user specifies a keyword such as a title, an author's name, or a publisher of the book in the book selection page. In response thereto, a list of books is displayed as a result of information retrieval by the keyword.

### Step 6: Selection of the book to be purchased

At detection of the book in the displayed book list, the user selects the book by the mouse and then transfers control to an order confirmation page. The confirmation page is displayed as follows. Namely, on the page in which the book is selected, there is an arc to the order confirmation page. In the book selection page, when the user clicks the mouse cursor for the arc to the order confirmation page, the URL of the order confirmation page and the number assigned to the selected book are transmitted from the user system.

### Step 7: Confirmation and ordering of the book in order confirmation page

The user confirms the title of the book, the number of volumes to be purchased and the amount of payment. If the confirmed items are acceptable, the user depresses an order button by the mouse for the purchasing of the book. When the order button is depressed, the URL selected in step 6 for the ordering of the book is transmitted to the WWW server. On the other hand, if the user does not desire the book after confirming the displayed items, the user depresses an order cancel button. In response to depression of the cancel button, the book selected in step 6 is not ordered. Namely, there is transmitted a URL code which does not place any order of articles or items.

### Step 8: Confirmation of ordering by electronic mail

After the book is ordered, an electronic mail indicating acceptance of the order of the book is sent from the bookstore. The mail informs the user of the title of book and the amount claimed for the book.

### Step 9: Confirmation of ordering in order status confirmation page.

To confirm the status of order, the user opens an order status confirmation page and inputs an order date to display the ordered book and the status of order thereof.

### Step 10: Delivery of books

After the book is completely ordered, the pertinent book is delivered in one or two weeks to the address beforehand registered.

As above, an article such as a book can be ordered through the WWW browser in the prior art.

In accordance with the conventional technology described above, the user can purchase a book at home via the Internet without going to the bookstore. However, the prior art is attended with the following problems.

### (1) It is difficult to prevent an unauthorized user from ordering articles.

In the conventional technology, when the user ID and the password are known, any operator can conduct steps 4 to 7 through arcs between the pages to open the order confirmation page. That is, any unauthorized person who knows the user ID and the password can display the order confirmation page and hence can buy books therefrom.

Moreover, skipping the page to input the user ID and the password, the operator can send the user ID and the page URL to select books to the shopping server at the same time. Therefore, even a user who does not know the password can purchase articles only if the user ID is known.

As above, in accordance with to the prior art, it is difficult to prevent an unauthorized user from ordering articles. The unauthorized users may possibly be children and the like. There may occur a case in which such a child orders articles even when he or she is not authorized to operate the apparatus, by the authorized user.

### (2) It is difficult to detect the order of articles placed by an unauthorized user.

In the conventional technology, when the user displays the page of order status confirmation counter in step 9 and inputs a date in the proximity of the order date at which the article was ordered, the book ordered and the status thereof can be confirmed. However, it is required that the communication apparatus such as a personal computer is connected to the network and the user ID and the password are inputted thereto so that the order status confirmation page is displayed to input the order date therein. This means that the procedure of confirming the order includes a large number of steps. It is therefore difficult to detect the order of articles accomplished by an unauthorized user.

It is therefore an object of the present invention to provide an electronic commercial transaction processing in which an unauthorized user is prevented from ordering articles in the commercial transaction processing via a communication network.

Moreover, another object of the present invention is to provide an electronic commercial transaction processing in which the ordering of articles by an unauthorized user can be easily detected in the commercial transaction processing via a communication network.

In accordance with the present invention, information of an article or item selected is transmitted from a client apparatus to a server apparatus. When an order confirmation page is indicated, the client apparatus reads information of the page and sends the information to the server apparatus. The page received from the server apparatus is displayed on a display on the client side. Incidentally, the order confirmation page is only required be a page which makes it possible to confirm that an operator of the client apparatus has ordered an item. That is, the page is not limited to a home page of the Internet. Furthermore, the information of the order confirmation page is information related to a position of existence of the page. For example, the information may be an address indicating a position where information related to the page exists.

In another aspect of the present invention, there is configured an information processing apparatus (client apparatus) follows. That is, the information processing apparatus processing an electronic transaction via a network with another information processing apparatus receiving an order of articles comprises means for reading, when an operator indicates said another information processing apparatus to output information for confirmation of an order of articles, information necessary to output the "information for confirmation of an order of articles" from an external storage medium, and means for outputting the "information for confirmation of an order of articles" in accordance with the information read from the medium. In other words, the client apparatus capable of conducting an order operation transmits therefrom information of an article selected by an operator thereof. When an order confirmation page is indicated to order an article by the operator, the client apparatus reads information of the order confirmation page. The client apparatus may send the information thus read to a server apparatus related to the article supply destination. The client apparatus receives from the server apparatus an order confirmation page corresponding to the transmitted information. The client apparatus displays thereon the received page. In this connection, the server apparatus which is the transmission destination of the information regarding the order confirmation page may be different from the server apparatus which transmits the order confirmation page to the client apparatus. Additionally, the client apparatus which transmits the information regarding the order confirmation page may be different from the client apparatus which receives the order confirmation page from the server apparatus.

In another aspect of the present invention, there is provided a program to execute processing of the client apparatus. The program may be delivered via a network to be executed by a computer. Alternatively, the program may be stored on a recording medium to be executed by a computer.

In further another aspect of the present invention, there is configured a server apparatus as follows. The server apparatus sends to a client apparatus an order confirmation page related to information sent from the client apparatus. In this regard, the server apparatus which receives the information from the client apparatus may be different from the server apparatus which transmits the order confirmation page. In addition, the client apparatus which sends the information may be different from the client apparatus which is the transmission destination of the order confirmation page.

In still another aspect of the present invention, there is provided a program which executes processing of the server apparatus. The program may be delivered via a network to be executed by a computer. Furthermore, the program may be stored on a storage medium to be thereafter executed by a computer.

In another aspect of the present invention, there is configured an external storage medium on which information regarding an order confirmation page is stored. When an order confirmation page is indicated by a client apparatus, information regarding an order confirmation page is read from this storage medium. Incidentally, the external storage medium is a storage medium which is physically separated in configuration from the client apparatus. Consequently, the medium may be a floppy disk (FD), a magneto-optical (MO) disk, a compact disk read-only memory (CD-ROM), or the like which can be installed in and removed from the client apparatus by the operator. Moreover, the external storage medium may be included in a facility which can be connected to the client apparatus. In this case, the connection between the external storage medium and the client apparatus may be established by connecting an apparatus including the external storage medium to the client apparatus. For example, a server apparatus including the external storage medium may be arranged on the network.

For example, the user inputs a URL code to the WWW browser running on a client apparatus to open a page to select an article. In the prior art, the URL of the order confirmation page is written in the page to select articles. Consequently, the user can obtain the order confirmation page by indicating the URL. However, in accordance with the present invention, the URL of the order confirmation page is stored on the external storage medium and an arc of the order confirmation page in the article selecting page is stored in a storage facility of the external storage medium. Since the URL of the order confirmation page is beforehand stored in the external storage medium, the order confirmation page can be read therefrom by reading the URL thereof. When the external storage medium is missing in the purchasing operation of an article, the order confirmation page cannot be attained via the communication network, and hence it is impossible to order articles. In accordance with the present invention, even an unauthorized person who knows the user ID and the password cannot order articles without an external storage medium in which the URL is stored.

However, even when there exists the above means, the URL of the order confirmation page can be detected by executing a program (generally called "robot") to detect a server apparatus in which the hyper-text transfer protocol daemon (httpd) is operating. To cope with the difficulty, the present invention further provides a system to easily detect an order of articles conducted by an unauthorized user.

That is, in another aspect of the present invention, there is provided an electronic commercial transaction processing method comprising the steps of displaying an order confirmation page on a display, transmitting to a server apparatus information related to an indicated order confirmation, thereafter recording information regarding a selected article both in a storage of a client apparatus and on an external storage medium, and comparing and collating information of articles recorded in the storage with information of articles recorded on the external storage medium. Moreover, the client apparatus implementing the electronic commercial transaction method is also one aspect of embodying the present invention. Furthermore, a program to achieve the electronic commercial transaction method is one aspect of embodying the present invention.

When ordering an article, an authorized user connects the external storage medium to the client apparatus. For example, the user may install the external storage medium in external storage medium read/write means. Additionally, the connection between the external storage medium to the client apparatus may be established by connecting an apparatus including an external storage medium to the client apparatus. For example, a server apparatus including the external storage medium may be arranged on the network. In this case, the server apparatus with the external storage medium may be shared among a plurality of users. The program may be distributed via the network to be executed by a computer. In addition, the program may be stored on a storage medium to be executed by a computer.

As a result, the contents of orders placed by an unauthorized user, i.e., a user not having an external storage medium are stored only in the storage means in the client apparatus and hence differ from those of the external storage medium of the authorized user. In accordance with the present invention, the contents of wrong orders made from a client apparatus by a user other than an authorized user can be detected by comparing the contents of transactions in the storage means of the client apparatus with those of the external storage medium.

Incidentally, the contents of orders may be stored in a storage other than the storage means of the client apparatus in this operation. In such a case, the storage may be a computer connected to the network.

A method of embodying the present invention by a program on a client apparatus has been described. However, the order of articles attempted by an unauthorized user may also be prevented by a program on the side of a server apparatus. That is, until information of the order confirmation page is requested by a server apparatus, the history of addresses indicating existing positions of information items requested by client apparatuses is kept stored in the storage. When the information of the order confirmation page is requested, the system determines whether or not the contents and the sequence of addresses indicating existing positions of the stored information items are adequate.

For example, the shopping server stores the history of URL transmitted from clients. When an order confirmation page is requested, the order of an article requested by an unauthorized user can be prevented by reading the history thereof from the storage. For example, a check is made for the sequence of transmission of URL in the history of URL. When the sequence conforms to a predetermined sequence, the order confirmation page is transmitted. The sequence of transmission of URL is beforehand supplied to the authorized user. Therefore, the user can place the order of an article by opening the order confirmation page. An unauthorized user who does not have information of the URL transmission sequence cannot order articles.

In this connection, a program which runs on the client or server apparatus and supports the commercial transaction processing method may be stored on a recording medium for the delivery thereof. Furthermore, the program may be delivered via the network. Additionally, the program need not be stored in the client and server apparatuses and may be transmitted via the network for the execution thereof.

The objects and features of the present invention will become more apparent from the consideration of the following detailed description taken in conjunction with the accompanying drawings in which:
Fig. 1 is a flowchart showing a processing procedure of the WWW browser in a first embodiment of the present invention;
Fig. 2 is a diagram showing a hardware configuration of a client apparatus in the first embodiment;
Fig. 3 is a diagram showing a data layout of URL information stored in an external storage medium of the first embodiment;
Figs. 4A and 4B are diagrams showing constitution of an external storage medium read/write facility in which the external storage medium is installed in the first embodiment;
Fig. 5 is a diagram of a screen example showing a state in which an article is selected by the WWW browser in the first embodiment;
Fig. 6 is a flowchart showing a procedure of reading the URL of an order confirmation page from the external storage medium of the first embodiment;
Fig. 7 is a diagram showing a screen example of the order confirmation page in accordance with the URL read from the external storage medium of the first embodiment;
Fig. 8 is a flowchart showing a processing procedure of the WWW browser of a second embodiment in accordance with the present invention;
Fig. 9 is a diagram showing a data layout of transaction result information stored on the external storage medium of the second embodiment;
Fig. 10 is a diagram showing a data layout of transaction result information stored in a magnetic unit of the second embodiment;
Fig. 11 is a flowchart showing a procedure of comparing the order transaction result between the external storage medium and the magnetic disk unit of the second embodiment;
Fig. 12 is a diagram showing a screen example when an order operation attempted by an unauthorized user is detected in the second embodiment;
Fig. 13 is a diagram showing a data layout of transaction result information stored on the external storage medium of a third embodiment in accordance with the present invention;
Fig. 14 is a diagram showing a data layout of transaction result information stored in a magnetic unit of the third embodiment;
Fig. 15 is a diagram showing a screen example when an ordering operation requested by an unauthorized user is detected in the third embodiment;
Fig. 16 is a flowchart showing a processing procedure of the httpd in a fourth embodiment of the present invention;
Fig. 17 is a diagram showing the hardware configuration of a server apparatus in the fourth embodiment;
Fig. 18 is a diagram showing a data layout of URL reception history information in the fourth embodiment;
Fig. 19 is a diagram showing a data layout of URL sequence information in the fourth embodiment;
Fig. 20 is a diagram showing a screen example to notify impossibility of transmission of an order confirmation page in the fourth embodiment;
Fig. 21 is a flowchart showing a processing procedure of the httpd in a fifth embodiment;
Fig. 22 is a diagram showing a data layout of URL reception history information of the fifth embodiment;
Fig. 23 is a diagram showing a data layout of URL access time information of the fifth embodiment;
Fig. 24 is a first diagram for explaining an external storage in the first embodiment; and
Fig. 25 is a second diagram for explaining the external storage in the first embodiment.

Referring now to the drawings, description will be given in detail of embodiments in accordance with the present invention.

### (1) First embodiment

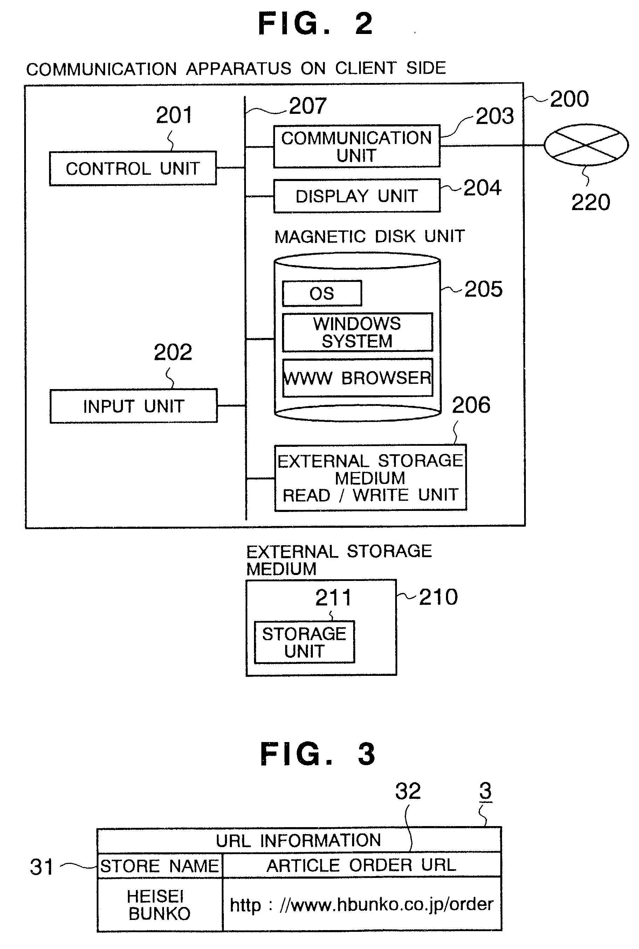

Fig. 2 diagrammatically shows a hardware structure of a communication apparatus 200 of the electronic commercial transaction processing system in this embodiment. The apparatus 200 includes an information processing apparatus, such as a personal computer including a communication unit 203; alternatively, the apparatus 200 includes a facility, such as a television set, a portable information communication terminal, or an apparatus for games which can be connected to the Internet. The apparatus 200 on the client side is linked via a communication network 220 with an information processing apparatus on the side of the WWW server, not shown.

The communication apparatus 200 includes a control unit 201, an input unit 202, a communication unit 203, a display unit 204, a magnetic disk unit 205, an external storage medium read/write unit 206, and a data bus 207 connecting these units to each other. In the read/write unit 206, an external storage medium 210 including a storage unit 211 is installed such that information is read from or written in the storage unit 211.

The control device 201 is a processing unit including a memory and a CPU such as a microprocessor which controls via the data bus 207 operations of the input unit 202, the communication unit 203, the display unit 204, the magnetic disk unit 205, and the read/write unit 206. The control unit 201 is an apparatus to execute programs, such as operating systems (OS's), the "Windows" (trade name) system, and the WWW browser.

The input unit 202 is a device including a mouse, a pen, and/or a keyboard which are/is employed to input information for the initiation of the WWW browser, to input a URL code, to conduct clicking operations on a home page, and to select an article to be purchased.

The communication facility 203 is a hardware/software equipment which transmits information, such as a URL code outputted from the WWW browser to the network 220 and which receives a hyper-text markup language (html) from the WWW server in conformity with the hyper-text transfer protocol (http). In this regard, when a gateway to support the http is arranged between the communication apparatus 200 and the communication network 220, the unit 203 serves as a facility to communicate information with the gateway.

The display unit 204 need only be capable of displaying screens of the WWW Browser. Therefore, a CRT display, a liquid crystal display, or the like may be used as the display unit 204.

The magnetic disk device 205 is a non-volatile storage facility to store therein programs, such as the operating system, the "Windows" system, and the WWW browser. To record information, there may be used, in place of the magnetic disk, another equivalent storage device including a floppy disk, a semiconductor storage device. Although the magnetic disk unit 205 is adopted in the communication apparatus 200 in this embodiment, the unit 205 may be installed at a location outside the apparatus 200. In this case, it is only necessary that the unit 205 can be connected to the communication apparatus 200. Moreover, the magnetic unit to store therein the programs including the operating system, the "Windows" system, and the WWW browser is not necessarily be configured in a physically single unit.

The external storage medium reader/writer 206 is a device which reads information such as the URL from the storage unit 211 of the external storage medium 210 installed therein and which writes information in the storage unit 211.

The external storage medium 210 may be a storage medium, such as a portable magnetic card, an IC card, a floppy disk (FD), magneto-optical (MO) disk, or a ZIP.

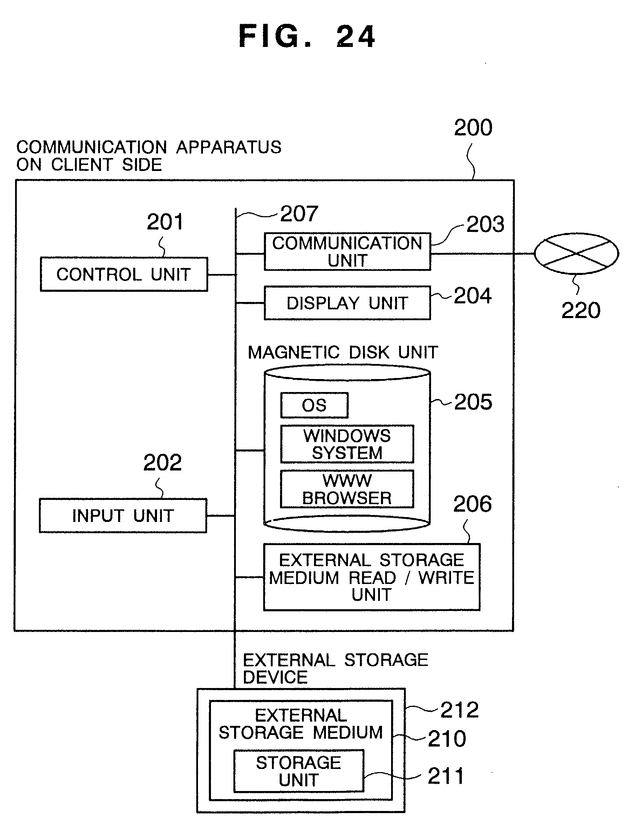

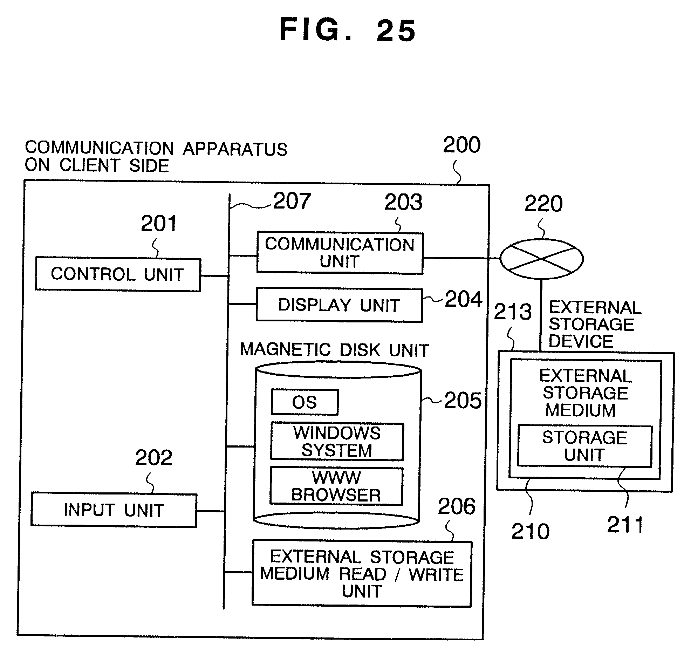

Incidentally, the external storage medium may be configured as shown in Figs. 24 and 25, not in the structure shown in Fig. 2. In either configurations, the medium is not to be installed in the read/write unit 206. In the configuration shown in Fig. 24, a storage 212 including an external storage medium can be connected to the communication apparatus. Additionally, in the structure of Fig. 25, a storage 213 including an external storage medium can be connected via the communication network 220 to the communication apparatus. For example, there may be employed a hard disk unit. In this connection, although an external storage medium read/write unit 206 is shown in Figs. 24 and 25, the unit 206 may be dispensed with.

Furthermore, the program of the WWW browser is supplied from an external storage medium, other than the storage medium 206, and is stored in the magnetic disk unit 205 via a read/write unit such as the read/write unit 206. Alternatively, the program is supplied via the network 220 to be stored in the magnetic disk unit 205. In addition, the WWW browser program need not be stored on the magnetic disk 206, namely, the program stored on an external storage medium may be directly executed. Moreover, the program need not be stored on the disk 206, i.e., it may also be possible to execute the program delivered via the network.

Fig. 3 diagrammatically shows a data layout of URL information 3 stored in the storage unit 211 of the external storage medium 210. The layout includes a store name 31 and an article order URL 32 which is a URL of a page in which the article is ordered. The medium 210 in which the URL information 3 is stored is passed from a store or a firm designated by the store name 31 to the user in a service operation manner. For example, the medium 210 is sent by post to the user when the user registers to the electronic shopping system.

Next, description will be given of a processing procedure of the WWW browser, mainly, of processing to prevent an unauthorized user from ordering articles by storing the URL of an order confirmation page on the medium 210.

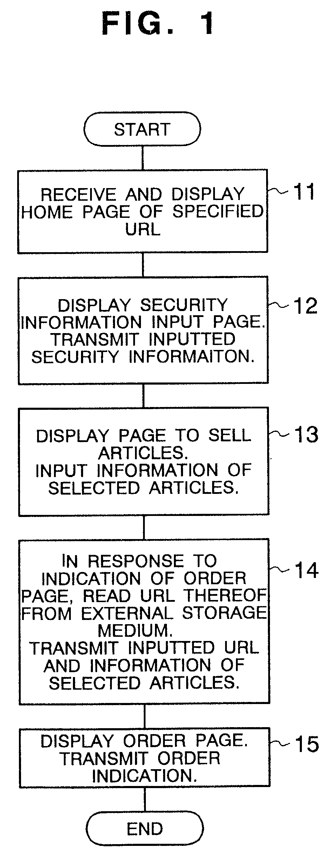

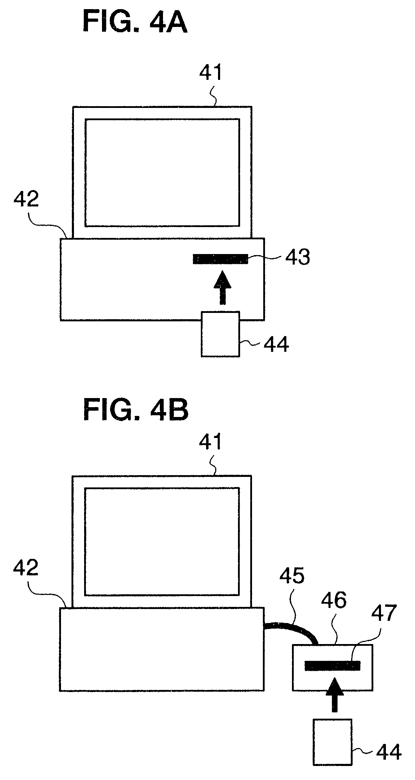

Fig. 1 shows in flowchart the processing procedure of the WWW browser. In a state in which the operating system (and the "Windows" system) are in operation, when a file name of the WWW browser is supplied via the input unit 202 or when an icon of the file displayed on the display 204 is clicked, the program of the WWW browser on the magnetic disk unit 205 is invoked. Subsequently, the user installs the medium 210 in the read/write unit 206. Figs. 4A and 4B show an example of installation of the medium 210 in the read/write unit 206. In Fig. 4A, a reference numeral 41 indicates a monitor 41 to display thereon the WWW browser, i.e., a display 204, a numeral 42 denotes a communication apparatus 200, a numeral 43 designates a slit of the read/write unit 206 to insert an external store medium therein, and a numeral 44 indicates the external storage medium 210. The user inserts the medium 44 in the slit 43. The inserted medium 210 is then set to the read/write unit 206 such that read and write operations thereof become possible. Fig. 4B shows an example in which the read/write unit 206 is arranged outside the communication apparatus 200. In Fig. 4B, a reference numeral 45 indicates a cable to establish connection between the apparatus 200 and the read/write unit 206, a numeral 46 denotes the read/write unit 206, and a numeral 47 represents a slit of the unit 206 to receive an external storage medium.

In step 11, when a URL of the home page to purchase articles is supplied via the input unit 202, the WWW browser sends the received URL via the communication unit 203 and the network 220 to the WWW server and displays the pertinent home page on the display 204. When a security information input page is requested from the input unit 202, the WWW browser transmits the URL to the WWW server.

In step 12, the received input page of security information is presented on the display 204. When a user ID and a password are inputted via the input device 202 and a page to sell articles is requested, the received security information and the URL of the article selling page are sent to the WWW server.

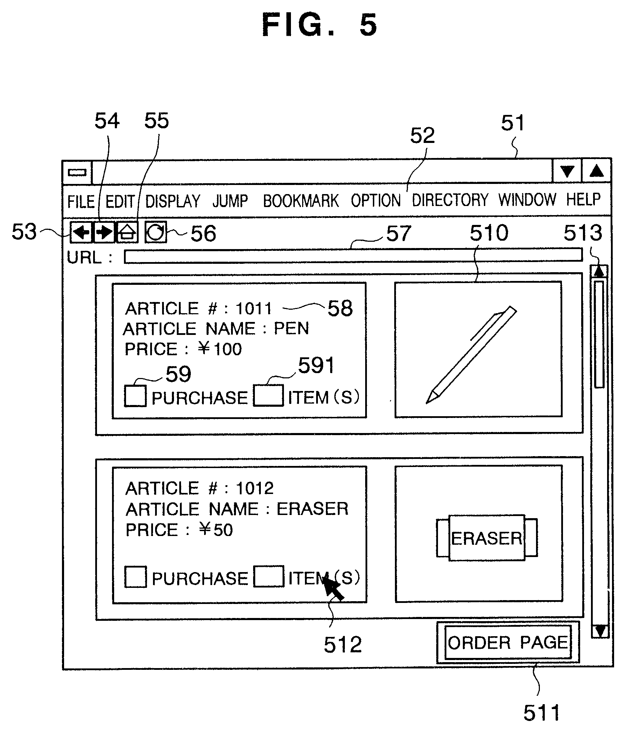

In step 13, the received page is presented on the display 204 for the user to select articles. Fig. 5 shows an example of articles supplied in relation to the WWW browser and buttons for the purchase of articles. Fig. 5 includes a WWW browser screen 51, a menu bar 52 to operate the WWW browser, a preceding page display button 53, a succeeding page display button 54, a button 55 to display a home page beforehand registered to the WWW browser, a re-load button 56 to load again a page, an area 57 is used to receive a URL inputted, article information 58, a purchase acceptance button 59, an area 591 in which the number of articles to be purchased is inputted, an article image 510, a button 511 to display an order confirmation page, a mouse cursor 512, and a scroll bar 513 to display other articles. In the example of Fig. 5, the supplied articles include a pen and an eraser which are 100 yen and 50 yen, respectively. When an article to be purchased is determined and is detected in the screen, the user clicks the purchase acceptance button 59, inputs the number of articles in the area 591, and then clicks the order confirmation page button 511.

In step 14, when the button 511 is clicked, an article order URL 32 is read from the storage 211 of the medium 210 and then the URL and an article code of the article are sent to the WWW server.

In step 15, the received order confirmation page is presented on the display 204. When an order indication is inputted via the input unit 202, the order indication and the URL are transmitted to the WWW server.

Thereafter, the user confirms the order of articles on the WWW browser or in an article order mail received by E-mail and then removes the medium 210 from the read/write unit 206.

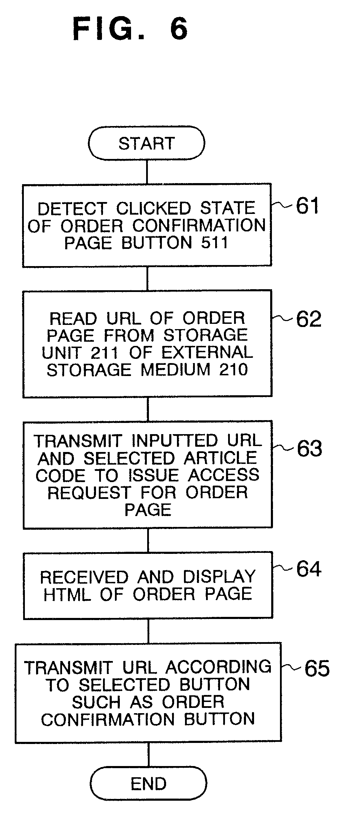

Referring next to the flowchart of Fig. 6, description will be given in detail of steps 14 and 15.

In step 61, when the order confirmation page button 511 is clicked, the WWW browser detects the condition of the button 511.

In step 62, the URL information 3 is read from the storage unit 211 of the medium 210. When the URL information cannot be obtained in this operation, for example, because the medium 210 is missing in the read/write unit, the processing of the WWW browser is terminated. Moreover, when URL is inputted to the area 57, the processing of the WWW browser is terminated. In addition, even when the article order URL 32 is read from the storage, if the URL of the order confirmation page button 511 is beforehand received from the WWW server, the URL received from the WWW server in association with the button 511 is compared with the URL 32. When these URLs are different from each other, the processing of the WWW browser is terminated.

In step 63, when an appropriate URL is inputted via the medium 210, the inputted URL and the selected article code are sent to the WWW server to issue a request to access the order confirmation page.

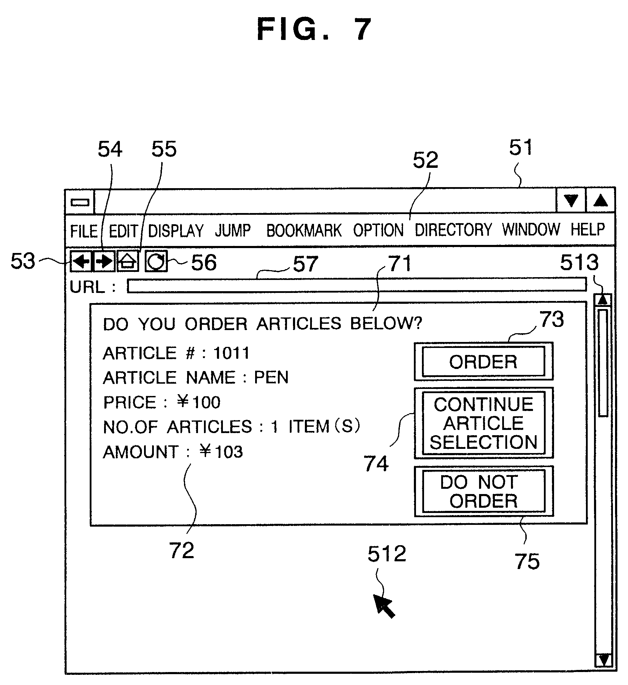

In step 64, an html file of the order confirmation page is received and is displayed in the screen of the WWW browser 51. Fig. 7 shows an example of the order confirmation page presented in step 64. In Fig. 7, there are shown a label 71 "Do you order articles below?", information 72 indicating the contents of the ordered article, an order button 73, a button 74 to continue selection of articles, and a button 75 to cancel the order.

In step 65, in response to the depressed button 73, 74, or 75, a URL corresponding thereto is sent to the WWW server. When the order button 73 is depressed, there are transmitted a URL corresponding thereto, an article code assigned to the article to be purchased, and the number of articles. When the order button 74 is depressed, a URL of the article selling page is transmitted to the WWW server and then control is returned to step 13. When the order button 75 is depressed, a URL of a home page to purchase the article is transmitted and then control is returned to step 11.

Incidentally, in the first embodiment, the conventional httpd program can be used without modification thereof for the httpd program on the side of the WWW server.

The first embodiment of the present invention has been described. In the prior art, when the user ID and/or the password of another person are/is known, it is possible for any operator to select and order an article for the following reasons. That is, there is disposed an arc from a page to select articles to a page to order articles; therefore, control can be easily transferred from the article selection page to the order confirmation screen. In accordance with the first embodiment, if the article URL 32 is not read from the external storage medium 210, the operator cannot order the article. Consequently, it is possible to prevent an unauthorized user who does not possess the medium 210 from ordering articles.

### (2) Second embodiment

In accordance with the first embodiment, although the article order URL 32 is stored in the medium 210, there is contained only general information not specifically related to respective users. In consequence, it is difficult to prevent the inappropriate operation to order articles by an unauthorized operator when an external storage medium 210 other than the own external storage medium 210 of the person having the user ID and the password is used, when an external storage medium 210 onto which other URL information 3 is copied is utilized, or when an external storage medium 210 forged by an operator who knows the article order URL 32 is employed. The second embodiment provides means for detecting an inappropriate order of articles conducted by using a storage medium 210 other than the storage medium 210 possessed by the authorized person. When applying the second embodiment to practices, the second embodiment is added to the first embodiment. The hardware configuration and the data layout of URL information are kept unchanged.

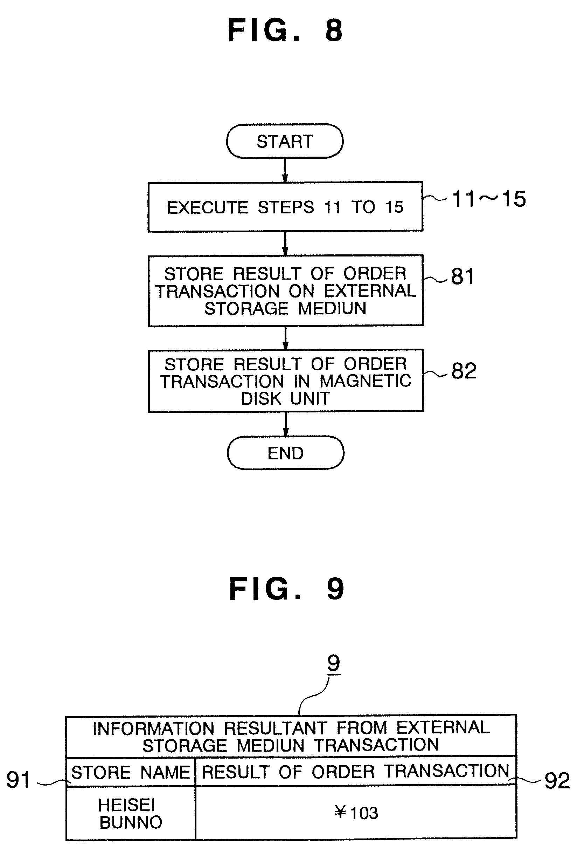

Fig. 9 diagrammatically shows a data layout of the information resultant from external storage media transaction 9 stored in the storage unit 211 of the medium 210. A reference numeral 91 indicates a store name and a numeral 92 denotes an order transaction result. The result is the total of amounts of transactions handled during a predetermined period of time.
The initial value thereof is set to null.

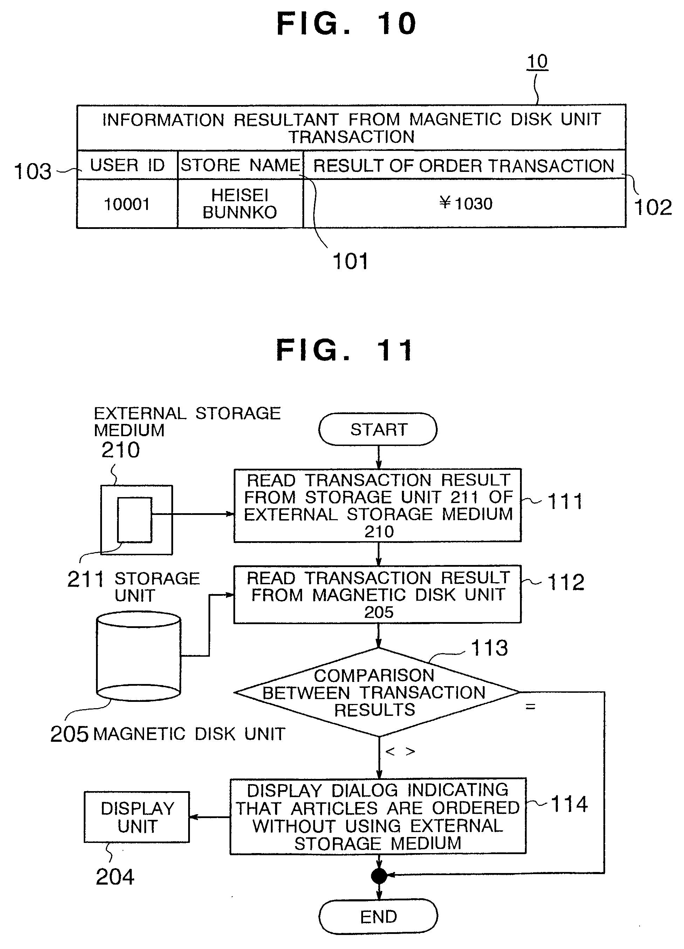

Fig. 10 diagrammatically shows a data layout of the information resultant from magnetic disk unit transaction 10 stored in the magnetic disk unit 205. A numeral 101 designates a store name and a numeral 102 indicates an order transaction result. The result 102 is the total of amounts of transactions processed during a predetermined period of time, and the initial value thereof is set to null. A numeral 103 denotes a user ID, which is necessary when the communication apparatus is shared among a plurality of users.

Fig. 8 shows in flowchart a processing procedure of the WWW browser. The processing procedure from step 11 to step 15 is the same as that of the first embodiment.

In the processing of step 81, when the result 92 of the information 9 is null, the purchase amount of articles specified for the purchase thereof in the processing up to step 15 is stored in the result field 92. When the result 92 is other than null, the amount is added to the amount already stored therein. The resultant amount is then written in the result field 92.

In the processing of step 82, an operation is conducted to refer to the information resultant from magnetic disk unit transaction 10 of which the user ID field 103 includes an ID equal to the pertinent user ID. When the order transaction result 102 is null, the amount of articles purchased in the processing up to step 15 is stored in the field of order transaction result 102. When the result 102 is other than null, the amount is added to that already stored therein and then the resultant amount is stored in the result field 102.

Thereafter, confirming the order of articles, the user removes the external storage medium 210 from the reader/writer 206.

The medium 210 is installed in the read/write unit 206 of the communication apparatus 200 whenever articles are to be purchases such that the result of the purchasing of articles is stored equally on the medium 210 and in the magnetic disk unit 205 of the apparatus 200. In consequence, when articles are ordered without using the medium 210 or when articles are ordered with an external storage medium other than that possessed by the authorized user, the order transaction result 92 on the medium 210 differs from the order transaction result 102 in the disk unit 205. It is therefore possible to detect the order of articles conducted by an unauthorized user. Moreover, it may also be possible that an order which exists in the result 92 on the medium 210 and which is missing in the result 102 of the disk unit 205 is regarded as an inappropriate order.

Referring next to Fig. 11, description will be given of a processing procedure of the WWW browser to compare the order transaction result on the medium 210 with that in the disk unit 205. When a menu is selected during execution of the WWW browser program, the processing is conducted in the following procedure.

In step 111, the storage device 211 of the medium 210 is accessed to read therefrom the order transaction result 92 of the information resultant from external storage transaction 9.

In step 112, the disk device 205 is accessed to read therefrom the order transaction result 102 of the information resultant from magnetic disk transaction 10 of which the user ID field 103 includes an ID associated with the pertinent user ID.

In step 113, the results 92 and 102 respectively obtained in steps 111 and 112 are compared with each other. When the results 92 and 102 differ from each other as a result of comparison, step 114 is executed. When the results 92 and 102 are equal to each other, it is assumed that the purchase of articles is conducted by an authorized user and hence the processing is terminated.

Incidentally, an appropriate operation is assumed to be conducted when the results 92 and 102 are equal to each other in the case above. However, when an order transaction 92 on the external medium is missing in the result field 102 of the magnetic disk, it may also be possible to assume that the transaction is appropriately conducted.

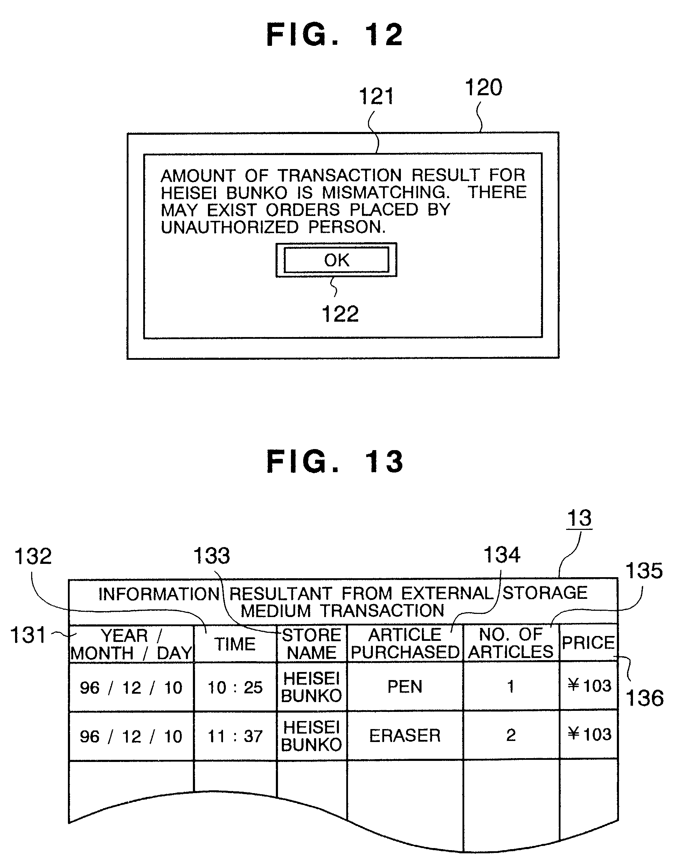

In step 114, a dialog is presented on the display 204 to indicate that the order has been placed by an unauthorized user. Fig. 12 shows a screen example displayed in this case. In Fig. 12, a numeral 120 indicates a frame of the display unit 204, i.e., a frame of display, a numeral 121 denotes a dialog to notify that an order is conducted by an unauthorized user, and a numeral 122 is a button which the user depresses after confirmation of the condition. When the button 122 is depressed, the processing is terminated. Thanks to the presentation of Fig. 12, the user can immediately detect the order made by an unauthorized user.

In this connection, the event thus detected may be reported to the server apparatus. Additionally, the server apparatus having received the message may interrupt the processing of the transaction in accordance with the notified event.

In the second embodiment, it is possible for the WWW browser to record and check the order transaction results 92 and 102 without communicating with the WWW server. However, since there are adopted the communication apparatus 200 and the magnetic disk unit 205, the operation above is to be executed only when the same communication apparatus are utilized. To determine presence/absence of an order placed by an unauthorized user even when different communication apparatuses 200 are used, it is necessary to store the information resultant from magnetic disk transaction 10 in a storage of the WWW server. In this situation, the result of the order transaction is transmitted in step 82 to the WWW server such that the result is stored in the result field 102 of the information 10 on the WWW server side. Furthermore, in step 112, a request is issued to the WWW server so that the result 102 of the information 10 is received from the WWW server.

In this connection, the disk transaction result 10 may be stored in an apparatus other than the WWW server.

### (3) Third embodiment

In the third embodiment, like the second embodiment, an inappropriate order of articles placed by an unauthorized user is detected by comparing the transaction amount recorded on the external storage medium with that recorded in the magnetic disk unit 205. However, more detailed information, not the total amount of transactions is recorded for each transaction, and the transaction results of the respective storage units are compared with each other. The processing procedure of the WWW browser of this embodiment is almost equal to that of the second embodiment, but the data layout is altered as follows for the information resultant from external storage transaction 9 and the information resultant from disk transaction 10.

Fig. 13 diagrammatically shows a data layout of the information resultant from external storage transaction 13 stored in the storage 211 of the medium 210. Each record of the information 13 includes a transaction data year/month/day 131, a transaction time 132, a store name 133, a purchased article 134, a quantity of articles 135, and a price 136.

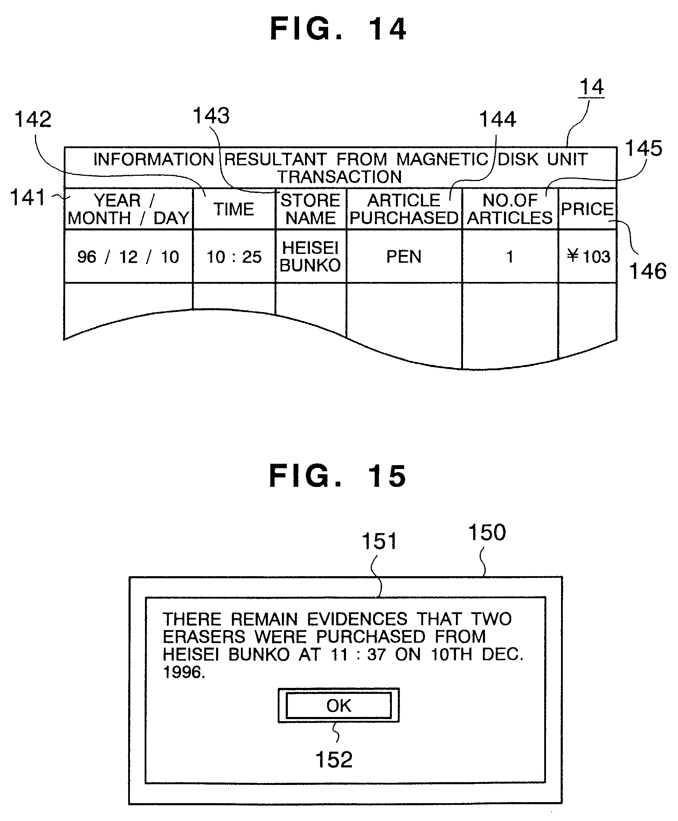

Fig. 14 diagrammatically shows a data layout of information resultant from magnetic disk transaction 14 written in the magnetic disk unit 205 for each user ID. Each record of the information 14 includes a transaction data year/month/day 141, a transaction time 142, a store name 143, a purchased article 144, a quantity of articles 145, and a price 146. In this regard, the information 14 need only identify the contents of transaction and hence is not restricted by the records above.

In step 81 of this embodiment, a record including the date 131, the time 132, the store name 133, the article 134, the quantity 135, and the amount 136 is stored in the information field 13 of the medium 210. Moreover, in step 82 for the same transaction information, a record including the date 141, the time 142, the store name 143, the article 144, the quantity 145 and the amount 146 is stored in the information field 14 of the disk unit 205. Additionally, in step 111, the respective records of the information 13 are sequentially read beginning at the first record thereof. In step 113, the contents of records of the information 13 are sequentially compared with those of the records of the information 14 in a record-by-record manner beginning at the first record thereof. When the contents of records of the information 13 are completely equal to those of records of the information 14, the processing is terminated. When there exists a record for which the comparison results in a non-corresponding state, i.e., a mismatching state, the contents of the record are extracted and control is passed to step 114.

Incidentally, even when the mismatching records are present, control may be transferred to step 113 in the following case. This applies to a case in which the information resultant from disk transaction 10 is stored in another facility, such as the WWW server. Namely, a matching record exists in another apparatus. In this case, the apparatus may be assigned to each of the predetermined groups of clients; alternatively, the apparatus may totally cover all clients.

Fig. 15 shows a display example of a dialog presented when there is detected a transaction record existing only in the information 14. A numeral 150 indicates a frame of the display 204, i.e., a display frame, a numeral 151 denotes a dialog to notify an event that an order is conducted by an unauthorized user, a numeral 152 designates a button user depresses after confirmation of the condition. When the button 152 is depressed, the processing is terminated. Due to the display of Fig. 15, it is possible for the user to immediately detect the order requested by an unauthorized user.

In the third embodiment, when the storage device 211 of the external storage medium 210 is larger in capacity than that of the second embodiment, the transaction information can be recorded more in detail. Consequently, when an ordered item is cancelled, it is possible to explain details of transaction information to the store.

### (4) Fourth embodiment

In the fourth embodiment, an order placed by an unauthorized user is detected by monitoring whether or not the user issues the predetermined URL in a predetermined sequence. This embodiment provides a function to be incorporated in the httpd program on the WWW server side. The WWW browser program on the client side can be used without any modification. In this connection, the fourth embodiment is independent of the first to third embodiments and hence can be implemented together with the first to third embodiments.

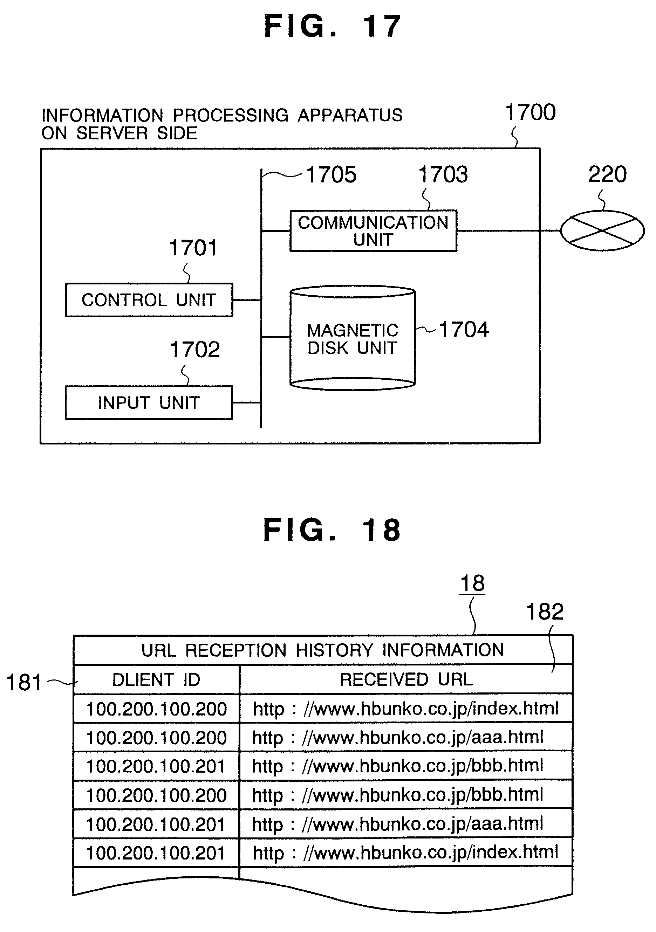

Fig. 17 diagrammatically shows a hardware structure of an information processing apparatus 1700 on the server side in the electronic transaction processing system of this embodiment. The apparatus 1700 on the server side may be an information processing apparatus, such as a personal computer or a workstation. It is only necessary to achieve the function of the apparatus 1700 as follows. The apparatus 1700 on the server side is connected via the communication network 220 to a communication apparatus on the client side, not shown.

The information processor 1700 includes a control unit 1701, an input unit 1702, a communication unit 1703, a magnetic disk unit 1704, and a data bus 1705 which connects these units to each other.

The controller 1701 is a processing apparatus including a memory and a CPU to control via the data bus 1705 the input device 1702, the communication facility 1703, and the disk device 1704. The controller 1701 executes programs such as an operating system (OS) and the WWW server program (httpd), which will be described later.

The input device 1702 is a unit including a mouse, a keyboard, and the like to input instructions and data therefrom.

The communication facility 1703 is a hardware/software unit which receives information, such as a URL sent from the WWW browser in conformity with the http and which sends information such as the html.

The disk device 1704 is a non-volatile storage to store therein programs, such as the operating system and the httpd program.

In this connection, the httpd program is provided via an external storage media to be stored via an external storage medium read/write device in the disk unit 1704. Alternatively, the httpd program is supplied via the communication network to be stored in the disk device 1704.

Fig. 18 is a diagram showing a data layout of URL reception history information 18 stored in the disk unit 1704. Each record of the information 18 includes a client ID 181 and a received URL 182 and is recorded in the disk device 1704 in a sequence of arrival thereof at the information processing apparatus 1700. Incidentally, the client ID 181 may be assigned for each external storage medium.

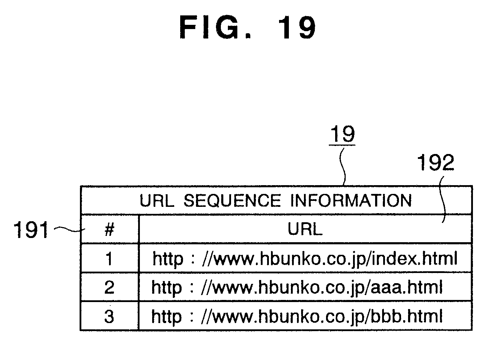

Fig. 19 shows a data layout of the URL sequence information 19 stored in the disk unit 1704. Each record of the information 19 includes a sequence 191 and a URL 192. The information 19 is used to set the contents and a sequence of a URL to be received before an URL of an order page by the WWW server. For example, in accordance with the first embodiment, the URLs to be received by the WWW server are a URL of a home page to purchase articles, a URL to request an input page of security information, and a URL of a page in which articles are available.

Next, description will be given of a processing procedure of the httpd program, primarily, of processing in which received URLs are historically accumulated to monitor the sequence of accumulated URLs such that the order confirmation page is transmitted only when URLs arrive thereat in a predetermined sequence. This prevents an unauthorized user from ordering articles.

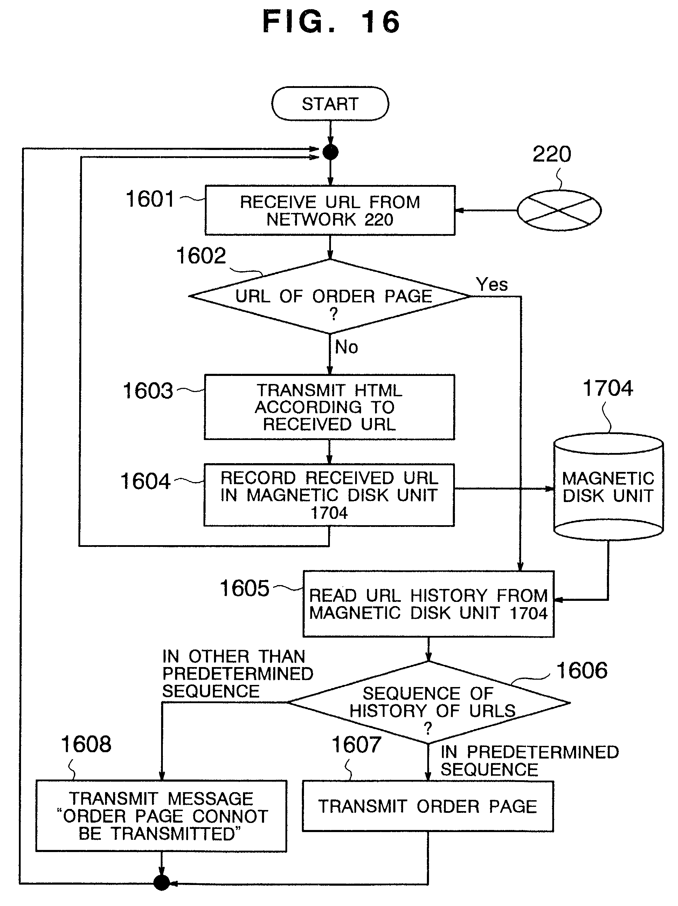

Fig. 16 shows in flowchart a processing procedure of the httpd program. In the processing of step 1601, a URL from a client and a client ID of the client having transmitted the URL are received via the communication facility 1703. When the URL is missing, the program waits for the reception of a URL in this step.

In the processing of step 1602, a check is made to determine whether or not the URL received in step 1601 is related to an order confirmation page. When this is not the case, control is passed to step 1603. When this is the case, step 1605 is executed.

In the processing of step 1603, the disk device 1704 is accessed to obtain therefrom the html corresponding to the received URL and then the html is sent via the communication facility 1703 to the client having transmitted the URL.

In step 1604, the URL received in step 1601 and the client ID of the client having sent the URL are added to the URL history information, which forms a record including a received URL 182 and a client ID 181. After the execution of this step, control is passed to step 1601.

In the processing of step 1605, the URL reception history information 18 is accessed by using as a key the client ID received in step 1601 to read therefrom a predetermined number of received URLs 182 beginning at the latest item. In this embodiment, three items are obtained therefrom beginning at the newest item.

In step 1606, a check is made to determine whether or not three URLs obtained in step 1605 match the URL of the URL field 192 in the URL sequence information 19 and whether or not the URLs are received in the predetermined sequence. When a matching result is obtained for the URLs and the URL receiving sequence is acceptable, step 1607 is executed. If a mismatching result is attained or if the URL receiving sequence is unacceptable even when a matching result is attained, control is passed to step 1608.

In the processing of step 1607, an order confirmation page is read from the disk device 1704 in accordance with the client ID obtained in step 1601. The page is then transmitted via the communication facility 1703 to the client.

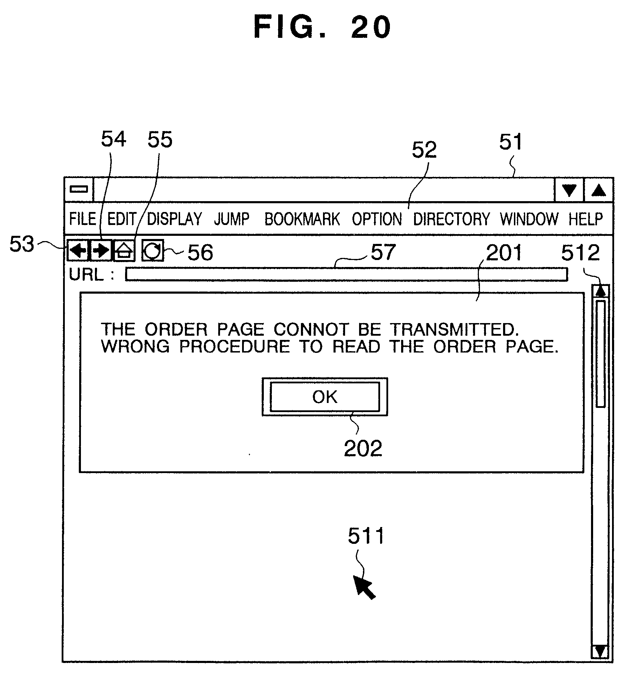

In step 1608, in accordance with the client ID received in step 1601, a message "Order confirmation page cannot be transmitted" is transmitted via the communication facility 1703. Fig. 20 shows an example of the message. In Fig. 20, a numeral 201 indicates a message dialog and a message and a numeral 202 denotes a button which is depressed by the user after confirmation of the message. When the button 202 is depressed, the message is notified to the WWW server by the URL and then the processing of the httpd program is terminated.

In accordance with the fourth embodiment, the authorized user has information of a procedure to read the order confirmation page, i.e., a sequence of pages to be displayed before the order confirmation page. Consequently, any operator who does not know the page display sequence, namely, an unauthorized user cannot display the order confirmation page. Therefore, even if the user can select articles, it is not possible for the user to order the articles. Furthermore, in accordance with the fourth embodiment, there can be prevented an inappropriate transaction of ordering articles in which, for example, a user who knows the URL of the article selling page selects and orders articles by skipping the security information input page.

### (5) Fifth embodiment

In the fifth embodiment, the client apparatus monitors a period of time in which a particular URL is kept received to thereby detect an order of articles placed by an unauthorized user. The fifth embodiment provides a function to be incorporated in the httpd program on the WWW server side. The function can be utilized without any modification of the WWW browser program on the client side. In this connection, the fifth embodiment is to be substituted for the fourth embodiment and is independent of the first to third embodiments. Namely, the fifth embodiment may be implemented together with the first to third embodiments. Additionally, to realize the fifth embodiment in practices, it is unnecessary to change the hardware configuration of the information processing apparatus 1700 on the server side shown in Fig. 17.

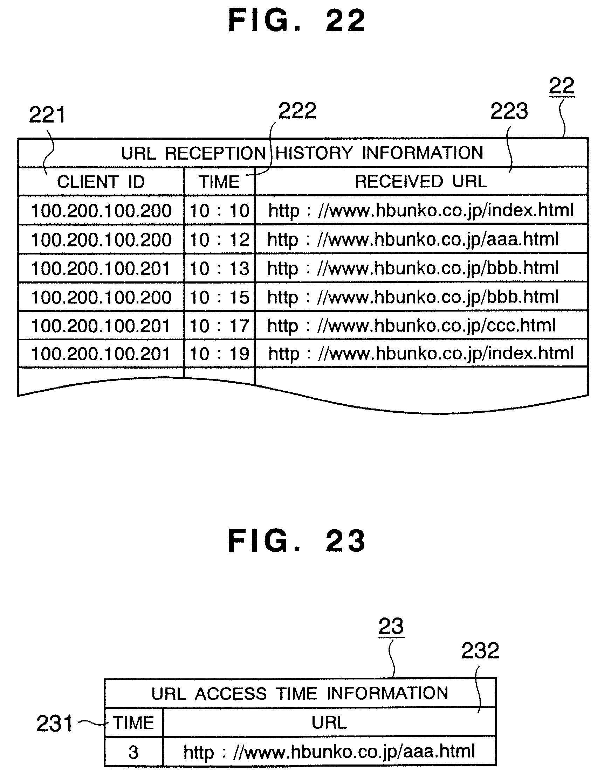

Fig. 22 diagrammatically shows a data layout of the URL reception history information 22 stored in the magnetic disk device 1704. Each record of the information 22 includes a client ID 221, a time 222, and a received URL 223 and is recorded in the disk device 1704 in a sequence of arrival thereof at the information processing facility 1700. The time 222 is a point of time at which the associated URL 223 is received from a client apparatus having the corresponding client ID 221.

Fig. 23 diagrammatically shows a data layout of URL access time information 23 stored in the disk device 1704. Each record of the information 23 includes a time 231 and a URL 232. Set to the information 23 is a time (in minutes) at which the URL indicated by the URL 232 is accessed.

Next, description will be given of the procedure to process the httpd program, mainly, the procedure in which received URLs are historically accumulated and a period of time in which a particular URL is kept accessed is monitored by referring to the reception time values of accumulated URLs such that an order confirmation page is transmitted only when the URL is received by the user in a predetermined period of time. This prevents an unauthorized user from ordering articles.

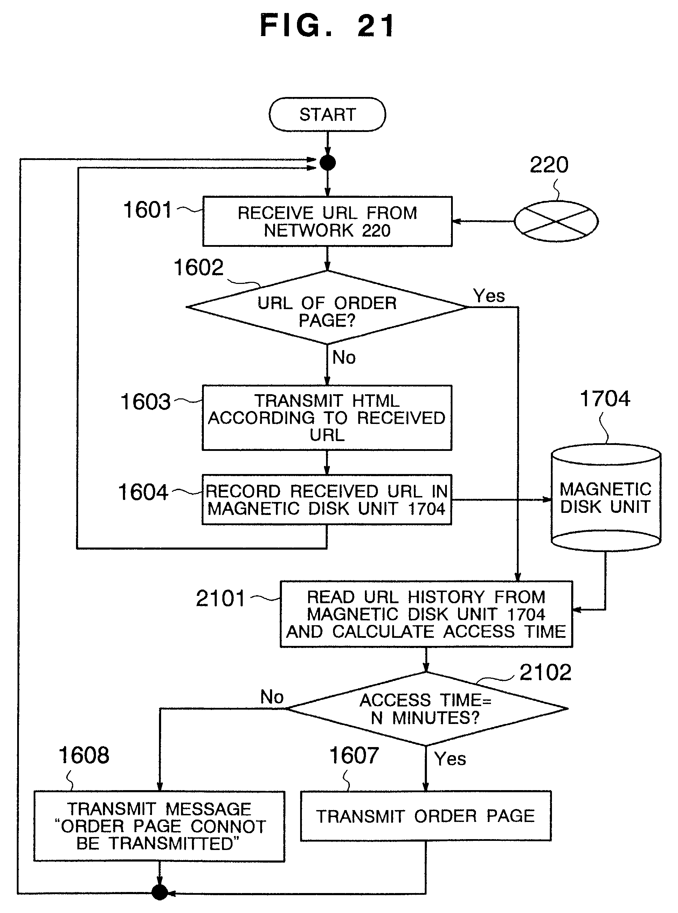

Fig. 21 shows in flowchart a processing procedure to execute the httpd program. Processing of steps 1601 to 1604 and steps 1607 and 1608 are substantially the same as those of the fourth embodiment. Description will now be given of steps 2101 and 2102, which is an aspect of this embodiment.

In the processing of step 2101, the URL 232 is obtained from the URL access time information 23 and then the client ID 221 and the time 222 are acquired from the URL reception history information 22 with the URL 232 set as a read key. In an example of the embodiment, there is obtained the URL 232, i.e., "http://www.hbunko.co.jp/aaa.html". Setting "http://www.hbunko.co.jp/aaa.html" as a key, the information 22 is accessed to obtain the client ID "100.200.100.200" having transmitted "http://www.hbunko.co.jp/aaa.html" and a point of time "10:12" at which "http://www.hbunko.co.jp/aaa.html" was received. Using as a key the client ID read in this step, there is obtained a point of time of the URL received after "http://www.hbunko.co.jp/aaa.html". In this embodiment, "http://www.hbunko.co.jp/bbb.html" was received at time "10:15" from the client ID "100.200.100.200". Next, a time difference is obtained between the time "10:12" of reception of "http://www.hbunko.co.jp/aaa.html" read in this step and the time "10:15" of reception of "http://www.hbunko.co.jp/bbb.html" to calculate a period of time in which "http://www.hbunko.co.jp/aaa.html" is kept received. Three minutes is attained in this case.

In the processing of step 2102, a check is made to determine whether or not the time calculated in step 2101 is equal to the time 231 of the information 23. If this is the case, control is transferred to step 1607; otherwise, step 1608 is executed.

In this connection, even when a mismatching state is attained from the comparison, the "yes" may be assumed if the difference is within a predetermined range of time (or the access time is within a predetermined time).

In accordance with the fifth embodiment, the display period of time for particular pages to be presented before the order confirmation page is supplied to the authorized user. Consequently, an operator who does not know the page display period of time, namely, an unauthorized user cannot display the order confirmation page. Therefore, even when the unauthorized user can select articles, it is not possible for the user to order the articles.

As above, in accordance with the present invention, any user other than the authorized user who has an external storage medium to store therein the address of the order confirmation page cannot place an order for articles. Namely, it is possible to prevent an unauthorized user from ordering articles. Additionally, since information of articles stored in storage means in the client apparatus is compared and collated with information of articles recorded on an external storage medium, any order made by an unauthorized user can be easily detected.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

Further features of the present invention will now be defined in the following clauses:
1. An information processing apparatus {200) for processing an electronic transaction via a network {220) with another information processing apparatus {1700) receiving an order of articles, comprising:
   means {206) for reading, when an operator instructs said another information processing apparatus {1700) to output "information for confirmation of an order of articles", information necessary to output the "information for confirmation of an order of articles" from an external storage medium {210); and
   means {204) for outputting the "information for confirmation of an order of articles" in accordance with the information read from the medium {210).
2. An information processing apparatus {200) in accordance with clause 1, wherein
   the information necessary to output the "information for confirmation of an order of articles" includes an address {3) indicating an existing location of the "information for confirmation of an order of articles"'.
3. An information processing apparatus {200) in accordance with clause 1, wherein:
   the "information for confirmation of an order of articles " is stored in said another information processing apparatus {1700); and
   said information processing apparatus {200) sends the information read from said external recording medium {210) to said another information processing apparatus {1700),
   receives the "information for confirmation of an order of articles " therefrom in response to the transmission, and
   outputs the received "information for confirmation of an order of articles" to said output means {204).
4. An information processing apparatus {200) in accordance with clause 1, wherein
   the "information for confirmation of an order of articles" is information corresponding to articles selected for an order thereof by the operator.
5. An information processing apparatus {200) in accordance with clause 1, wherein
   when the operator confirms an order of articles with respect to the "information for confirmation of an order of articles", information of articles of which the order *is* confirmed *is* recorded in a storage device {205) of said information processing apparatus {200) and another recording device {210).
6. An information processing apparatus {200) in accordance with clause 5, wherein
   validity of the order of articles is confirmed by comparing the information recorded in said storage device {205) with that recorded in said another recording device {210).
7. An information processing apparatus {200) in accordance with clause 5, wherein
   said another recording device {210) is said external storage medium {210).
8. An information processing apparatus (200) in accordance with clause 5, wherein
   said another recording device (210) is a storage device connected to the network.
9. An electronic commercial transaction processing method for use with an information processing apparatus for processing an electronic transaction via a network with another information processing apparatus receiving an order of articles, comprising the steps of:
   receiving in said another information processing apparatus, when an instruction is issued from an operator to output "information for confirmation of an order of articles", information necessary to output the "information for confirmation of an order of articles" read from an external storage medium {Fig. 1, step 11); and
   outputting the "information for confirmation of an order of articles" to said another information processing apparatus in accordance with the received information {Fig. 1, step 15).
10. An electronic commercial transaction processing method in accordance with clause 9, wherein
   the information necessary to output the "information for confirmation of an order of articles" includes an address {3) indicating an existing location of the "information for confirmation of an order of articles".
11. An electronic commercial transaction processing method in accordance with clause 9, wherein
   the "information for confirmation of an order of articles', is information corresponding to articles selected for an ordering thereof by the operator {Fig. 13).
12. An electronic commercial transaction processing method in accordance with clause 9, wherein
   when the operator confirms an order of articles with respect to the "information for confirmation of an order of articles " , information of articles of which the order is confirmed is recorded in a storage device of said information processing apparatus and another recording device {Fig.8, steps 81 and 82).
13. An electronic commercial transaction processing method in accordance with clause 12, further including the step of:
   confirming validity of the order of articles by comparing the information recorded in said storage device with that recorded in said another recording device {Fig. 11, steps 113 and 114).
14. An electronic commercial transaction processing method in accordance with clause 13, wherein
   said another recording device is said external storage medium.
15. An electronic commercial transaction processing method in accordance with clause 13, wherein
   said another recording device is a storage device connected to the network.
16. An electronic commercial transaction processing system including a first information processing apparatus (200) to order articles, a second information processing apparatus (1700) to receive an order or articles from said first information processing apparatus {200), and a network {220) connecting said first information processing apparatus {200) to said second information processing apparatus (1700), wherein:
   the first information processing apparatus {200) reads, when an operator issues an indication that said second information processing apparatus {1700) outputs information for confirmation of an order of articles, information necessary to output the "information for confirmation of an order of articles" from an external storage medium (210) and outputs the information to said second information processing apparatus {1700); and
   the second information processing apparatus {1700) transmits the information for confirmation of an order of articles to said first information processing apparatus {200) in accordance with contents of the information sent from the first information processing apparatus {200).
17. An electronic commercial transaction processing method in which an order of articles is placed and the order of articles is received via a network, wherein
   a first information processing apparatus {200) reads, when an operator *issues* an indication that a second information processing apparatus {1700) outputs information for confirmation of an order of articles, information necessary to output the "information for confirmation of an order of articles " from an external storage medium {210) and outputs the information to said second information processing apparatus {1700); and
   the second information processing apparatus {1700) transmits the information for confirmation of an order of articles to said first information processing apparatus {200) in accordance with contents of the information sent from the first information processing apparatus {200).
18. An information processing apparatus {1700) for conducting a commercial transaction via a network {220) with another information processing apparatus {200) to order articles, comprising:
   receiving means {1703) for receiving, when an operator issues an instruction in said another information processing apparatus {200) to output information for confirmation of an order of articles, information necessary to output the "information for confirmation of the order of articles " read from an external storage medium {212); and
   transmitting means {1703) for transmitting the "information for confirmation of the order of articles" to said another information processing apparatus (200) in accordance with the received information.
19. A computer readable program product for rendering a computer {201) to implement the steps of:
   reading information necessary to output "information for confirmation of an order of articles" from an external storage medium (212) in response to an operator's indication instructing that said another information processing apparatus outputs the " information for confirmation of an order of articles"; and
   outputting said "information for confirmation of an order of articles " in accordance with the information read from the medium {212).

## Claims

1. An information processing apparatus including a control unit (201), a display unit (204), a communication unit (203) for communicating with a server via a network and a loading unit (43) for accepting an external storage medium (220), comprising:
means for reading, from said external storage medium loaded in said loading unit, read information necessary for reading a file as a basis of display information, in accordance with a user request;
means for transmitting said read information to said server using said communication unit;
means for receiving said file as a basis for read information from said server using said communication unit;
means for creating said display information from the file as a basis of display information; and
means for displaying said display information on said display unit.

2. An information processing apparatus in accordance with claim 1, wherein
said file as a basis of display information the information includes a file as a basis of home page and said read information includes a URL of the file.

3. An information processing apparatus in accordance with claim 1, wherein:
said file as a basis of display information is a file as a basis of an order confirmation page for confirmation of an order of articles.

4. An information processing apparatus in accordance with claim 1, wherein said control unit comprises means for terminating a processing request by the user when said read information fails to be read from said external storage medium.

5. An information processing apparatus in accordance with claim 1, comprising an input unit (202), wherein said control unit comprises:
means for receiving from said input unit, other read information different from said read information stored in said external storage medium;
means for transmitting said other read information to said server using said communication unit;
means for receiving from said server, a file as a basis of other read information different from the file as a basis of said display information using said communication unit;
means for creating said other display information from the file as a basis of said other display information; and
means for displaying said other display information on said display unit.

6. An information processing apparatus in accordance with claim 1, comprising a store unit (205), wherein said control unit comprises:
means for comparing information stored in said store unit with information stored in said external storage medium; and
means for displaying on said display unit a disagreement between the information stored in said store unit and the information stored in said external storage medium when it occurs.

7. An information processing apparatus in accordance with claim 6 wherein the information stored in said store unit and the information stored in said external storage medium are results of transactions performed in the past.

8. A method for displaying on an information processing apparatus display information obtained from a server connected via a communication network, comprising the steps of:
reading, from an external storage medium loaded into said information processing apparatus thereto, read information necessary for reading a file as a basis of said display information, in accordance with a request of a user in said information processing apparatus;
transmitting said read information within said information processing apparatus to said server;
receiving said file as a basis for read information from said server into said information processing apparatus;
creating said display information from the file as a basis of display information, within said information processing apparatus; and
displaying said display information on said information processing apparatus.

9. A computer-implemented program for implementing a process comprising the steps of:
reading, from an external storage medium loaded into an information processing apparatus thereto, read information necessary for reading a file as a basis of display information, in accordance with a request of a user in said information processing apparatus;
transmitting said read information within said information processing apparatus to a server connected with said information processing apparatus via a communication network;
receiving said file as a basis for read information from said server into said information processing apparatus;
creating said display information from the file as a basis of display information, within said information processing apparatus; and
displaying said display information on said information processing apparatus.
